# EUROPÄISCHE PATENTSCHRIFT

(11) **EP 0 465 954 B1**
(45) Veröffentlichungstag und Bekanntmachung des Hinweises auf die Patenterteilung: **02.08.1995**
(21) Anmeldenummer: 91110732.4
(22) Anmeldetag: 28.06.1991
(51) Int. Cl.: F16D 66/02

(54) **Bremsbelag-Verschleissgeber**
Brake lining usage detector
Détecteur d'usage de garniture de freinage

(30) Priorität: 09.07.1990 DE 9010354 U
(43) Veröffentlichungstag der Anmeldung: 15.01.1992
(73) Patentinhaber: Mannesmann Kienzle GmbH (HR B1220), 78052 Villingen-Schwenningen (DE)
(72) Erfinder: Kastler, Ernst, W-7737 Bad Dürrheim 4 (DE)

(56) Entgegenhaltungen:
- EP-A- 0 320 167
- FR-A- 2 485 133
- FR-A- 2 504 226

## Beschreibung

Die Erfindung betrifft einen Bremsbelag-Verschleißgeber mit einem hülsenförmigen Gehäuse, welches für eine Befestigung des Verschleißgebers an dem Bremsbelagträger einer Bremse ausgebildet ist und in welchem eine Schleife wenigstens einer Signalleitung verlegt ist.

Aufgabe eines derartigen Verschleißgebers ist es, durch eine geeignete Signalgabe eine vorbeugende Wartung der Bremse eines Rades bzw. der Bremsanlage eines Fahrzeuges zu veranlassen, um schädliche Betriebszustände zu vermeiden, andererseits einen Bremsbelagwechsel erst dann anzuzeigen, wenn diese Maßnahme tatsächlich erforderlich ist.

Da ein Verschleißgeber in einem bekanntermaßen außerordentlich rauhen Milieu eingesetzt wird und die Aussage des Verschleißgebers für die Verkehrssicherheit eines Fahrzeuges entscheidend ist, müssen hohe Anforderungen an eine zuverlässige und zweifelsfreie Funktion gestellt werden, zumal diese Funktion einmalig und erst nach einer gegebenenfalls langen Benutzungszeit an der Grenze der Benutzbarkeit eines Bremsbelages erforderlich ist.

Ein Verschleißgeber ist andererseits aber auch eine Verschleißvorrichtung, die bei jedem Bremsbelagwechsel ausgetauscht werden muß und somit kostengünstig herstellbar und problemlos montierbar sein sollte.

Der Einbau eines Verschleißgebers erfolgt vorzugsweise in einer der Nietverbindung von Bremsbacke und Bremsbelag dienenden Durchgangsbohrung, was verständlicherweise Dimensionierungsprobleme seitens des Verschleißgebers schafft. Andererseits wäre für den Einbau eines Verschleißgebers außerhalb des Bremsbelages, wobei der Verschleißgeber konstruktiv freier gestaltbar wäre, der zwar einmalige, aber zusätzliche Aufwand einer Bohrung im Bremsbelagträger erforderlich.

Die angestrebte Funktionsgenauigkeit wird bestimmt durch die Architektur des Verschleißgebers, die verwendeten Materialien und die Einbaukonfiguration, wobei Feuchtigkeit, aber auch aggressive Medien, Vereisung und relativ tiefe Temperaturen im Wechsel mit relativ hohen Temperaturen beispielsweise beim Bremsen auf Paßfahrten wirkungslos sein müssen.

Ein wesentlicher Aspekt bei dem gattungsgemäßen Prinzip eines Verschleißgebers mit einer für eine Durchtrennung vorgesehenen Schleife einer mit Masse verbundenen Signalleitung ist eine genaue Positionierung der Schleife. Ferner ist ein relativ weiter Schleifenbogen vorteilhaft, damit sich nach dem Durchtrennen der Schleife keine Kurzschlußbrücke bilden kann und beispielsweise durch Berühren der Leitungsteile oder aufgrund eines leitenden Schmutzfilms eine Unterbrechung der Signalgabe erfolgt.
Eine genaue Positionierung der Signalleitungsschleife erfordert es, daß während und nach der Herstellung des Verschleißgebers Entspannungsbewegungen der Signalleitung und/oder eine Verschiebbarkeit der Signalleitung beispielsweise beim Einbau des Gebers unter allen Umständen vermieden werden. Auf der anderen Seite scheiden herkömmliche Fertigungsverfahren gemäß FR-A-2 504 226, wie Einkleben oder Einbetten bzw. Vergießen mit einer keramischen Vergußmasse oder auch Verschweißen, die eine derartige Beweglichkeit ausschließen würden, deshalb aus, weil diese Fertigungsverfahren arbeits- und zeitintensiv und für eine maschinelle Fertigung des Verschleißgebers ungeeignet sind. Einen zusätzlichen Arbeitsgang stellt auch das Quetschen eines an dem Gehäuse angeformten, rohrförmigen Ansatzes dar. Abgesehen von dem für diese Lösung erforderlichen, sperrigen und aufwendigen Gehäuse, ist eine derartige Verbindung wegen der Kurzschlußgefahr infolge Alterung der Isolation für den Anwendungszweck zu unsicher.

Die Aufgabe, die der Erfindung zugrunde liegt, besteht somit darin, einen gattungsgemäßen Verschleißgeber derart auszubilden, daß bei einer Herstellung unter Großserienbedingungen eine genaue Positionierung einer oder mehrerer Signalleitungsschleifen bei möglichst geringem Fertigungsaufwand zufriedenstellend reproduzierbar ist.

Die Lösung dieser Aufgabe wobei ein die Schleife stützender Halter vorgesehen und der Halter in das Gehäuse eingesetzt und mit dem Gehäuse fest verbunden ist, ist dadurch gekennzeichneit, daß in dem Gehäuse Umlenkmittel vorgesehen sind, welche während des Einsetzens des Halters in das Gehäuse bei gleichzeitigem Strammziehen der auf der Gegenseite aus dem Gehäuse herausragenden Leitungsteile der Schleife die Signalleitung durch Verformen selbsttätig fixieren.

Ein bevorzugtes Ausführungseispiel sieht vor, daß in dem Halter in axialer Richtung zwei Bohrungen und an der nach außen weisenden Stirnseite eine die Bohrungen verbindende Nut angeformt sind, daß die Durchgangsbohrung des Gehäuses gestuft ausgebildet ist, daß den Bohrungsöffnungen gehäuseseitig eine Umlenkfläche zugeordnet ist und daß die Umlenkfläche an einem in das Gehäuse einsetzbaren Umlenkring ausgebildet ist.

Der Vorteil, den die Erfindung bietet, besteht darin, daß einfache Bauteile verwendet sind und der Verschleißgeber lediglich durch loses Zusammenfügen der Bauteile beispielsweise in einer Richtung und durch ein nachfolgendes Verformen des Gehäuses funktionsfähig komplettierbar ist und somit die Voraussetzungen für eine maschinelle Montage gegeben sind. Justierarbeit sowie eine arbeitsintensive Montage oder eine toleranzempfindliche Achitektur sind vermieden.

Ein entscheidender Vorzug der Erfindung stellt die beim Zusammenbau selbsttätig wirksam werdende Fixierung der Signalleitungen dar. Diese sozusagen in dem Verschleißgeber integrierte Schub-/Zug-Sicherung erfolgt durch ein engwinkliges Umlenken der Signalleitungen. Bei Verwendung eines isolierenden Umlenkringes kann auch bei relativ starker Kerbung der Isolation der Signalleitungen und einem metallischen Gehäuse die Kurzschlußgefahr mit Sicherheit vermieden werden.

Erwähnenswert ist ferner, daß das Gehäuse als Niet- oder als Schraubhülse ausgebildet sein kann und daß wegen des Durchschleifens der auf der ganzen Länge isolierten Signalleitungen keine Abdichtungsmaßnahmen erforderlich sind.

Im folgenden sei die Erfindung anhand der Zeichnungen näher erläutert. Es zeigen
Fig. 1 ein Anordnungsbeispiel eines Bremsbelag-Verschleißgebers,
Fig. 2 ein bevorzugtes Ausführungsbeispiel des neuerungsgemäßen Verschleißgebers in einer dem Montageablauf entsprechenden Explosionsdarstellung,
Fig. 3 einen Längsschnitt des Verschleißgebers gemäß Fig. 2 in zusammengebautem Zustand,
Fig. 4 eine Draufsicht des Verschleißgebers gemäß Fig. 3,
Fig. 5 einen vergrößerten Teilschnitt gemäß der Schnittlinie I in Fig. 4,
Fig. 6 einen Schnitt eines weiteren Ausführungsbeispiels eines Verschleißgebers mit nur einer Signalleitung und einem nietbaren Gehäuse.

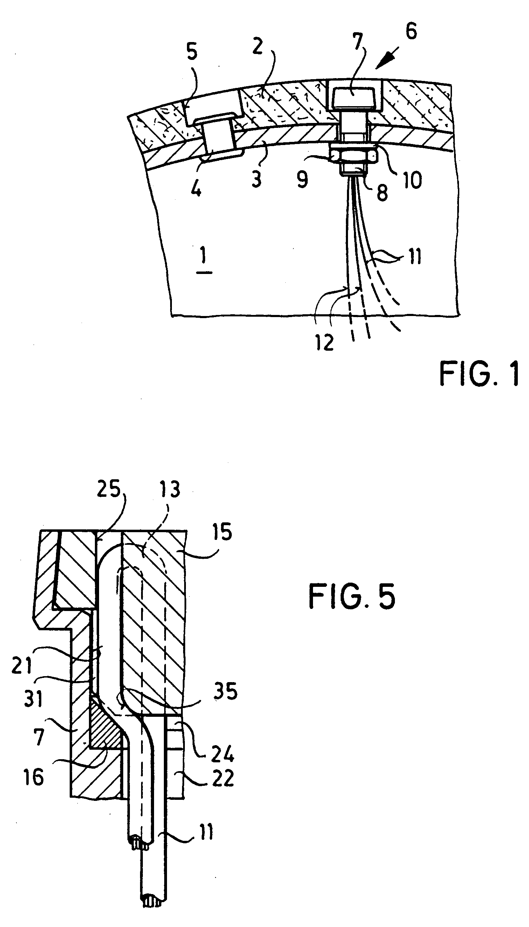

Das Anordnungsbeispiel Fig. 1 zeigt eine teilweise geschnittene Bremsbacke 1, beispielsweise einer Trommelbremse, mit einem innenliegenden Bremsbacken. Mit 2 ist einer von wenigstens zwei auf einer Schulter 3 der Bremsbacke 1 befestigten Bremsbelägen bezeichnet. Die Befestigung der Bremsbeläge erfolgt üblicherweise mittels mehrerer Niete, von denen einer mit 4 bezeichnet ist und denen im Bremsbelag 2 jeweils eine zylindrische Senkung 5 zugeordnet ist.

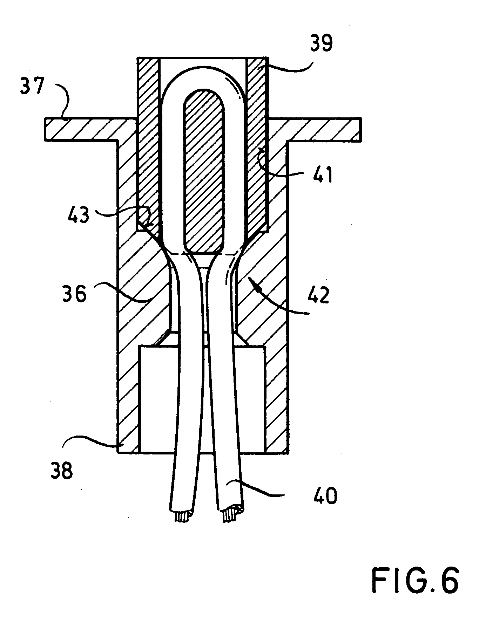

Der erfindungsgemäße Verschleißgeber 6 weist ein hülsenförmiges Gehäuse 7 mit einem Abschnitt größeren und einem dem Schaft des Nietes 4 entsprechenden Abschnitt kleineren Durchmessers auf. Letzterer ist mit einem Gewinde 8 versehen, d. h. der Verschleißgeber 6 läßt sich in eine für das Nieten der Bremsbeläge vorgesehene Durchgangsbohrung im Bremsbelag 2 und in der Schulter 3 der Bremsbacke 1 einsetzen und mittels einer Mutter 9 und einer zwischengelegten Scheibe 10 befestigen. Mit 11 und 12 ist jeweils eine vorzugsweise teflonisolierte Signalleitung bezeichnet, die bei dem verwendeten Geberprinzip durch den Verschleißgeber 6 durchgeschleift ist. Als Anordnungsvariante ist denkbar, den Gehäuseabschnitt größeren Durchmessers mit einem Rändel zu versehen, welcher gegenüber der Senkung 5 ein Übermaß aufweist, und den Verschleißgeber 6 in die vorgesehene Nietöffnung, die Senkung 5, einzupressen. Bei dieser Lösung ist ein Verschrauben nicht zwingend erforderlich. Denkbar ist ferner, das Gehäuse des Verschleißgebers 6 nietbar auszubilden, wie das Ausführungsbeispiel Fig. 6 zeigt.

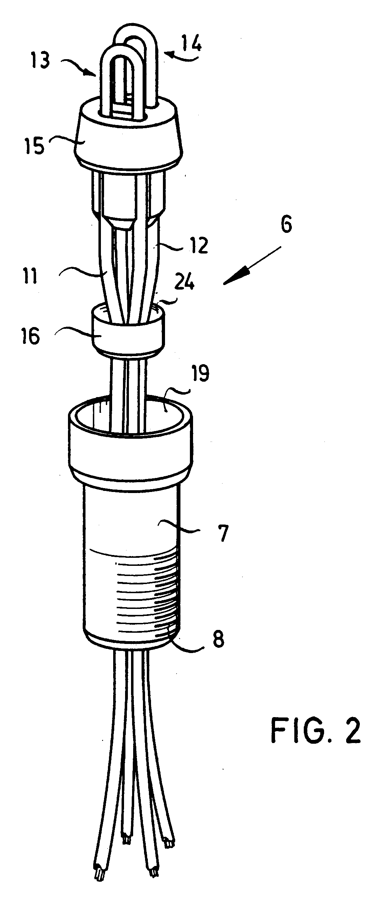

Das bevorzugte Ausführungsbeispiel wird, wie Fig. 2 zeigt, gebildet von zwei Schleifen 13 und 14 der Signalleitungen 11 und 12, einem Halter 15, einem Umlenkring 16 sowie dem hülsenförmigen Gehäuse 7. Bei der Montage des Verschleißgebers 6 werden die Signalleitungen 11 und 12 unter Bildung der Schleifen 13 und 14 in den Halter 15 eingezogen, der Umlenkring 16 auf die Signalleitungen 11, 12 aufgefädelt und die Signalleitungen 11, 12 durch das Gehäuse 7 hindurchgeführt. Danach werden durch Einziehen von Umlenkring 16 und Halter 15 in das Gehäuse 7 und Anziehen der Signalleitungen, wobei das Gehäuse 7 in einer geeigneten Vorrichtung festgehalten sein muß, die Signalleitungen 11, 12 zwischen dem Halter 15 und dem Umlenkring 16 verklemmt und auf diese Weise die Schleifen 13 und 14 fixiert. Anschließend wird der Halter 15 im Gehäuse 7 dadurch befestigt, daß der Gehäuseteil größeren Durchmessers an den in einem bestimmten Bereich konisch geformten Halter 15 angedrückt bzw. eingezogen wird.

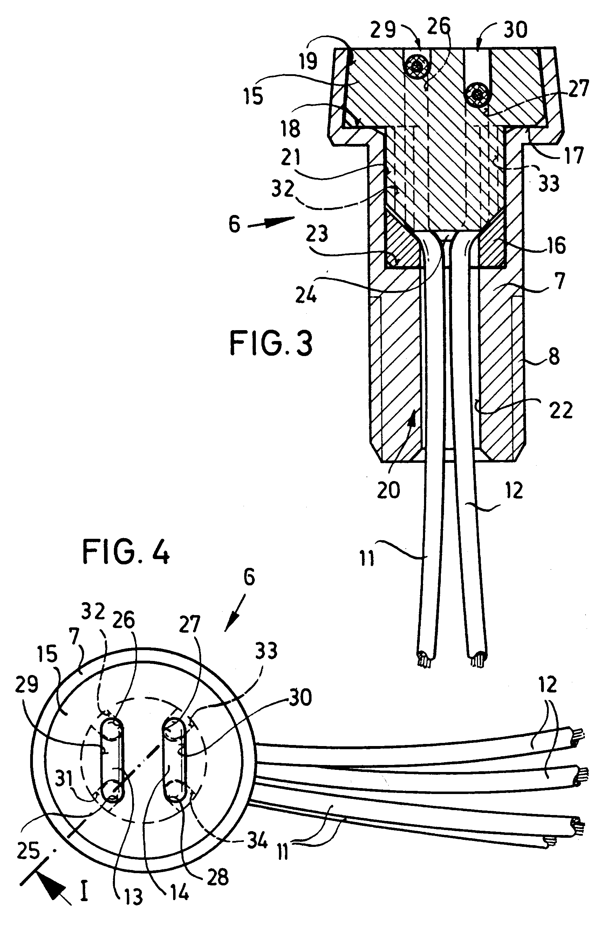

Die Fig. 3 zeigt, daß im zusammengbauten Zustand des Verschleißgebers 6 der als Ansatzbolzen ausgebildete Halter 15 mit einer Ringfläche 17 an der Stirnfläche 18 einer im Abschnitt größeren Durchmessers des Gehäuses 7 befindlichen Senkung 19 anliegt und nach außen im wesentlichen mit dem Gehäuse 7 abschließt. Ferner zeigt die Fig. 3, daß - von der Senkung 19 abgesehen - die Durchgangsbohrung 20 des Gehäuses 7 gestuft ausgebildet ist und der Halter 15 mit einem nicht näher bezeichneten Ansatz in einen Bereich größeren Durchmessers 21 der Durchgangsbohrung 20 hineinragt. Eine zwischen dem Bereich größeren Durchmessers 21 und einem Bereich kleineren Durchmessers 22 ausgebildete Übergangsfläche 23 dient dem Umlenkring 16, dessen eine Stirnfläche 24 konisch ausgebildet und als Umlenkfläche wirksam ist, als Anschlag.

Als Führung für die Signalleitungen 11 und 12 sind in dem Halter 15, wie aus den Fig. 3 und 4 ersichtlich ist, Bohrungen 25, 26, 27 und 28 vorgesehen, von denen jeweils zwei durch eine dem angestrebten Schleifenbogen entsprechende Nut 29 bzw. 30 verbunden sind. Die Nuten 29 und 30 sind bei dem bevorzugten Ausführungsbeispiel unterschiedlich tief ausgebildet, und zwar mit einem noch zulässigen Abtragungsabstand zwischen einem ersten Signal und einem in der Signalwirkung markanteren zweiten Signal. Die Bohrungen 25, 26, 27 und 28 sind derart angeordnet, daß sie im Bereich des Ansatzes des Halters 15 mit dessen Mantelfläche tangieren oder nur ein geringes Maß radial nach innen versetzt sind. Dadurch können einerseits die Schleifen 13 und 14 mit einem jeweils größtmöglichen Bogen ausgebildet werden, andererseits stehen sich, was bezgl. des Festhaltens der Signalleitungen 11 und 12 beabsichtigt ist, die nach innen weisenden Bohrungsöffnungen und die Stirnfläche 24 des Umlenkringes 16 wenigstens teilweise unmittelbar gegenüber.

In dem bevorzugten Ausführungsbeispiel gehen die Bohrungen 25, 26, 27 und 28 im Bereich des Ansatzes des Halters 15 in axiale Freisparungen 31, 32, 33 und 34 über. Den Bohrungsöffnungen sind, wie insbesondere aus der Fig. 5 ersichtlich ist, nutförmige, in Richtung der Mittenachse des Halters 15 verlaufende Kantenrundungen, von denen eine in Fig. 5 mit 35 bezeichnet ist, zugeordnet. Mit dem Grad der Kantenrundung 35 und der Tiefe der im wesentlichen parallel zur umlenkenden Fläche 24 des Umlenkringes 16 verlaufenden Kantenrundungsnut sowie mit der Gestaltung der Kante zwischen der Umlenkfläche 24 und der nicht bezeichneten Bohrungswand des Umlenkringes 16 läßt sich das Maß der Kerbung und/oder Quetschung der Isolation der Signalleitungen 11 und 12 festlegen. Dabei ist die Konizität der Umlenkfläche 24 derart zu wählen, daß ein Einziehen des Halters 15 bis zu einem sicheren Anschlagen an der Stirnfläche 18 des Gehäues 6 und ein Strammziehen der Signalleitungen 11 und 12 gewährleistet ist.

Bei dem Ausführungsbeispiel gemäß Fig. 6 ist ein ebenfalls hülsenförmiges Gehäuse 36 mit einem Flansch 37 und einem Nietansatz 38 vorgesehen. Ein Halter 39, durch welchen in diesem Falle nur eine Signalleitung 40 durchgeschleift ist, ist in einem Bereich größeren Durchmessers 41 einer gestuften Durchgangsbohrung 42 in das Gehäuse 36 eingepreßt und/oder an der Nahtstelle zum Flansch 37 mit dem Gehäuse 36 verstemmt. Das Ausführungsbeispiel stellt eine Einfachstlösung insofern dar, als eine der Fixierung der Signalleitung 40 dienende Umlenkfläche 43 unmittelbar am Gehäuse 36 ausgebildet ist und gleichzeitig die Umlenkfläche 43 dem Halter 39 als Anschlagfläche dient.

Der Vollständigkeit halber sei noch erwähnt, daß der Halter 15 sowie auch der Halter 39 aus einem im Hinblick auf die entstehenden Bremstemperaturen geeigneten, hitzebeständigen Kunststoff hergestellt sind. Denkbar ist insbesondere für den Halter 15 auch die Verwendung einer formbaren, keramischen Masse, sofern wegen der auftretenden Bremskräfte eine ausreichende Festigkeit und annähernd die gleichen Verschleißeigenschaften, wie sie das Bremsbelagmaterial aufweist, vorliegen, d. h. das verwendete Material weder schmiert, noch die Bremstrommel beschädigt. Ferner sei noch erwähnt, daß die Halter mittels einer Sickenverbindung in dem jeweiligen Gehäuse befestigbar sind, wobei die Befestigungsstelle außerhalb des Abtragungs- bzw. Verschleißbereichs des Verschleißgebers 7 vorgesehen werden muß. Erwähnenswert ist außerdem, daß die Signalleitungen beispielsweise durch einen geeigneten Stecker abgeschlossen sein können und daß es die gefundene Geberarchitektur ermöglicht, auf den Aufwand der Verwendung eines Schutzschlauches, in welchen die Signalleitungen eingefädelt werden müßten, verzichten zu können.

## Patentansprüche

1. Bremsbelag-Verschleißgeber mit einem hülsenförmigen Gehäuse (7), welches für eine Befestigung des Verschleißgebers an dem Bremsbelagträger einer Bremse ausgebildet ist und in welchem eine Schleife (13) wenigstens einer Signalleitung verlegt ist, wobei
ein die Schleife (13) stützender Halter (15) vorgesehen und
der Halter (15) in das Gehäuse (7) eingesetzt und mit dem Gehäuse (7) fest verbunden ist, dadurch gekennzeichnet,
daß in dem Gehäuse (7) Umlenkmittel vorgesehen sind, welche während des Einsetzens des Halters (15) in das Gehäuse (7) bei gleichzeitigem Strammziehen der auf der Gegenseite aus dem Gehäuse (7) herausragenden Leitungsteile der Schleife (13) die Signalleitung (11) durch Verformen selbsttätig fixieren.

2. Bremsbelag-Verschleißgeber nach Anspruch 1,
dadurch gekennzeichnet,
daß in dem Halter (15) in axialer Richtung zwei Bohrungen (25, 26) und an der nach außen weisenden Stirnseite eine die Bohrungen (25, 26) verbindende Nut (29) angeformt sind, daß die Durchgangsbohrung (20) des Gehäuses (7) gestuft ausgebildet ist und
daß den Bohrungsöffnungen gehäuseseitig eine Umlenkfläche (24) zugeordnet ist.

3. Bremsbelag-Verschleißgeber nach Anspruch 1,
dadurch gekennzeichnet,
daß die Umlenkfläche konisch ausgebildet und unmittelbar an dem Gehäuse (7) angeformt ist.

4. Bremsbelag-Verschleißgeber nach Anspruch 1,
dadurch gekennzeichnet,
daß die Umlenkfläche (24) an einem in das Gehäuse (7) einsetzbaren Umlenkring (16) ausgebildet ist.

## Claims

1. Brake-lining wear detector having a sleeve-shaped housing (7) which is constructed for the fastening of the wear detector to the brake-lining support of a brake and in which a loop (13) of at least one signal line is laid, a holder (15) which supports the loop (13) being provided and the holder (15) being inserted into the housing (7) and firmly connected to the housing (7),
characterised
in that there are provided in the housing (7) deflection means which, during the insertion of the holder (15) into the housing (7) while at the same time the line parts of the loop (13) which project from the housing (7) on the opposite side are pulled tight, automatically fix the signal line (11) in position by deformation.

2. Brake-lining wear detector according to Claim 1,
characterised
in that there are integrally moulded in the holder (15), in the axial direction, two bores (25, 26) and at the outwardly facing end a groove (29) connecting the bores (25, 26),
in that the through-bore (20) of the housing (7) is of stepped construction and
in that the bore openings are assigned on the housing side a deflection face (24).

3. Brake-lining wear detector according to Claim 1,
characterised
in that the deflection face is of conical construction and is integrally moulded directly on the housing (7).

4. Brake-lining wear detector according to Claim 1,
characterised
in that the deflection face (24) is constructed on a deflection ring (16) insertable into the housing (7).

## Revendications

1. Capteur d'usure de garniture de frein avec un carter en forme de douille (7) qui est réalisé pour permettre une fixation du capteur d'usure sur le support de garniture de frein d'un frein et dans lequel est posée une boucle (13) d'au moins une ligne de signalisation, un support (15) appuyant la boucle (13) étant prévu et ledit support (15) étant inséré dans le carter (7) et rigidement assemblé avec ledit carter (7),
caractérisée par le fait
que dans ledit carter (7) sont prévus des moyens de guidage qui, lors de l'insertion du support (15) dans le carter (7), fixent automatiquement, par déformation, la ligne de signalisation (11) tout en tendant fortement les parties de ligne de la boucle (13) qui, du côté opposé, émergent du carter (7).

2. Capteur d'usure de garniture de frein selon la revendication 1,
caractérisée par le fait
que dans le support (15) sont usinés deux alésages (25, 26) dans le sens axial ainsi que, sur la surface frontale dirigée vers l'extérieur, une rainure (29) reliant lesdits alésages (25, 26), que l'alésage de passage (20) du carter (7) présente une forme graduée, et
qu'aux ouvertures d'alésage est associée, du côté carter, une surface de guidage (24).

3. Capteur d'usure de garniture de frein selon la revendication 1,
caractérisée par le fait
que la surface de guidage (24) est conique et directement formée sur le carter (7).

4. Capteur d'usure de garniture de frein selon la revendication 1,
caractérisée par le fait
que la surface de guidage (24) est formée sur une bague de guidage (16) pouvant être insérée dans le carter (7).
